# EUROPEAN PATENT APPLICATION

(11) **EP 2 323 332 A1**
(43) Date of publication of application: **18.05.2011**
(21) Application number: 10190050.4
(22) Date of filing: 04.11.2010
(51) Int. Cl.: H04L 29/06

(54) **Controlling a session in a service provisioning system**

(30) Priority: 06.11.2009 EP 09175198
(71) Applicant: Koninklijke KPN N.V., 2516 CK The Hague (NL)
(72) Inventor: Pons, Colin, 3059 VC, Rotterdam (NL); Veenstra, Pieter, 2518 HR, The Hague (NL)

(57) **Abstract**

A method and a system for controlling a session in a service provisioning network is described, wherein the network comprises a serving network node associated with at least one terminal and wherein said terminal is configured to execute one or more services. The method comprises the steps of: providing a network border control node associated with a policy function; said network border control node receiving at least one signaling message originating from a service executed on said terminal; in response to said reception of said signaling message, said policy function selecting an policy, preferably an integrity policy, associated with said signaling message and controlling the integrity of said signaling message by executing said selected policy.

## Description

### Field of the invention

The invention relates to controlling a session in a service provisioning system, and, in particular, though not necessarily, to a method and a system for controlling at least one session in a service provisioning system, a network node for use in such system and a computer product program using such method.

### Background of the invention

Current service providing network systems, such as the IP Multimedia Subsystem (IMS) as developed by the Third Generation Partnership Project (3GPP), are designed to provide IP Multimedia over mobile communication networks (3GPP TS 22.228, TS 23.218, TS 23.228, TS 24.228, TS 24.229, TS 29.228, TS 29.229, TS 29.328 and TS 29.329). For fixed broadband services, such as Voice over IP (VoIP), the ETSI TISPAN working group is further developing IMS (TS 24.229: IP Multimedia Call Control Protocol based on SIP and SDP).

Within the IMS architecture, the basic user subscription functions and the IP session management are decoupled from the specific VoIP service functions, e.g. number analysis, CLIP/R, Call Waiting, Call Barring, Call Waiting, etc. These services are handled within one or more trusted application servers which reside in the network.

Such architecture based on application servers in the network may also be implemented on the basis of a Soft Switch design whereby the basic user subscription functions, the IP session management and the service functions are fully or partially integrated within one or more trusted application servers residing in the network.

Although the use of trusted application servers may provide a large number of multimedia services, such an application server based architecture also provides disadvantages, especially within the context of VoIP. In order to meet the demands regarding Quality of Services (QoS) and the regulatory demands for routing, privacy, security and legal interception, an application server typically requires user-specific configuration data for each service. It is involved in the call session for the complete duration of the call to maintain call state, thereby causing a substantial amount of signaling messaging to be exchanged between the various clients and network elements involved. Moreover, as the capacity of an application server is dependent on the number of subscribers to the services and the capacity of the IMS system or the Soft Switch system is scaling with the volume of data traffic, the dimensioning of the network resources in such conventional IMS system or Soft Switch system is complex and based on forecasts of the VoIP service behavior of the users of the system.

One way to solve this problem is the use of a service provisioning architecture as described in European patent application no. 09004140.1, which is hereby incorporated by reference into this application. In this architecture, the service provisioning system may be configured, e.g. by using initial Filter Criteria (iFC) in the user profile of the Home Subscriber Server (HSS), such that a user terminal may be prevented from registering to services hosted on the application servers of the service provisioning system when these services may also be executed on a user terminal.

Such configuration may result in a significant signaling load reduction in the network and thus provides a low cost solution for services, in particular VoIP services. However, as (part of) the services may be executed by client software in the terminals, and not inside the service provisioning system, further measures may be necessary in order to ensure trustable services meeting the QoS and regulatory demands. In particular, further control of the signaling messages and the associated media paths may be required so that integrity of the signaling messages may be provided (e.g. to prevent spoofing situations), unwanted redirection may be avoided and correct billing may be ensured. The above need may for example arise in cases wherein client software on a VoIP call receiving terminal B instructs the client software on a VoIP call originating user terminal A to establish a direct call session to a third terminal C, without the user of terminal A being notified or being otherwise aware of this redirected call. Even if the user of terminal A would have been notified of the redirection of the call session to terminal C, unwanted situations may occur if a direct session to terminal C is more expensive than a direct session to terminal B. This may easily occur when terminal B has an ordinary fixed line number, and terminal C would be reachable through a mobile number, or for instance a highly priced premium number.

Similar risks and needs also apply to interconnect relations between different service provisioning networks where further control of the signaling messages and the associated media paths is required so that integrity of the signaling messages may be provided, unwanted redirection may be avoided and undisputable settlements for accounting may be ensured. For instance an application server in a second service provisioning network, wherein a terminal B resides, may instruct the client software of a call initiating terminal A in a first service provisioning network to establish a direct call session to a third terminal C, without the user of terminal A being immediately aware. Even if the network operator serving terminal A is aware of the redirection of the call to terminal C, the redirection may lead to disputable settlements between both network operators, because any additional costs for the duration of the call session between terminal A and terminal C (as compared to a session between A and B), may no longer be associated with the redirection action in the second service provisioning network serving terminal B during call set-up. This association is simply lost during redirection.

Hence, there is a need in the art for methods, systems and network elements for providing improved control of a session in a service provisioning system.

### Summary of the invention

It is an object of the invention to reduce or eliminate at least one of the drawbacks of known service provisioning systems. In a first aspect the invention may relate to a method for controlling a session in a service provisioning network, wherein said network comprises a serving network node associated with at least one terminal and wherein said terminal being configured to execute one or more services. The method may comprise the steps of: providing a network border control node associated with a policy function; said network border control node receiving at least one signaling message originating from a service executed on said terminal; in response to said reception of said signaling message, said policy function selecting an policy, preferably an integrity policy, associated with said signaling message and controlling the integrity of said signaling message by executing said selected policy.

Configuring a network border control node according to a policy associated with a signaling message, allows efficient control of signaling messages generated by or originating from a, preferably service-enabled, terminal. Integrity control and unwanted redirection may be implemented in a simple way. Further, data connections (media paths) associated with the session may be short-cut and optimized, thereby efficiently reducing the resource load in the network.

In one embodiment, said signaling message may comprise a signaling response associated with a signaling request from an originating terminal and/or an originating signaling node. Hence, the policy function may check the integrity of response messages originating from a, preferably service-enabled terminal, e.g. one or more predetermined SIP responses from the SIP response code classes 3xx, 4xx, 5xx and 6xx originating from the, preferably service-enabled, terminal.

In a further embodiment said method may further comprise the step of: reserving network resources for a session between said originating terminal and/or an originating signaling node and said network border control node. In one embodiment said reservation may be based on resource information in said signaling request. Hence, using resource information in the SIP request or associated with the SIP request the network border control node may reserve resources (e.g. an IP and port addresses) for setting up originating and/or terminating sessions with one or more terminals when required by a policy executed by the policy function.

In yet a further embodiment, said method may further comprise the steps of: on the basis of said selected policy, checking whether said signaling response is allowable; and, if said signaling response is allowable, setting up a first session between said originating terminal and/or said originating signaling node and the network border control node and/or setting up a second session between the network border control node and a signaling target. The policy associated with the signaling response may thus check whether the target identified in the header of the signaling response is allowable. Allowability of a target may be simply determined by comparing the target in the signaling response with the addresses listed on a white list and/or a black list.

In one embodiment, said method may further comprise the step of: if said signaling response is not allowable on the basis of said selected policy, releasing resources reserved for a first session between said originating terminal and/or said originating signaling node and said network border control node. In another embodiment, said method further comprises the step of: on the basis of said selected policy, configuring said network border control node for providing at least a terminating signaling node for said originating terminal and/or for providing an originating signaling node for a signaling target comprised in said signaling request. Hence, when receiving for example a 302 Moved Temporarily response (the redirect request or instruction), the network border control node does not automatically release the resources. Instead, the policy function first checks on the basis of a policy associated with the response message whether the redirect request or instruction is allowable or not. If the redirect request or instruction is allowable, it may use the reserved resources to set up one or more sessions associated with media paths, which for example may form the call legs in a call session. This way the media paths associated with the call session are fully defined and controlled by the network border control node and the associated policy function, thereby allowing correct billing of the call.

In yet another embodiment said signaling target may be a terminating terminal or a terminating signaling node. In further variants said policy function may be located on said network border control node, on a server associated with said border network control node or on an application server associated with said serving network node.

In one embodiment said network border control node may be configured as a network border interface, preferably an access session border controller, between said service provisioning network and an access network or a user terminal. In another embodiment said network border control node may be configured as a network border interface, preferably an interconnection session border controller, between said service provisioning network associated with a first network operator and a further service provisioning network associated with a second network operator. An integrity policy function may be used with an access session border controller (A-SBC) for controlling subscribers accessing a network. Alternatively an integrity policy function may be used with an interconnect session border controller (I-SBC) for controlling interworking between different operator networks.

In one variant a request message (signaling message) may originate from a first service provisioning network. In another variant a response message associated with a request message from a first service provisioning network, may originate from a second service provisioning network. In yet another variant a first and second media path associated with the first and second session respectively, may be located within said first service provisioning network. Hence, the policy function may manage the media paths associated with sessions controlled by a network border control node. When using a policy function configured network border interface according to the invention, a call connection thus remains fully traceable and the terminals involved in the call and/or media session, may be charged for different parts of the connection. Even a terminal involved in an initial redirect action, but no longer be involved in the call or media session, may thus be charged for part of the connection. The call or media session preferably comprises a first and a second session, both terminating at the network border control node. At the same time data connections (media paths) may hence be short-cut and optimized. Such optimization efficiently reduces the resources of the network interfaces between operator networks (such as the I-BCF).

In one embodiment, the services in the service-enabled terminal, to which said signaling messages may relate, may comprise at least one call service. In a further embodiment the service-enabled terminal, or a subscriber associated with the service enabled terminal, is blocked by the service provisioning network, for being provided with at least one of said services through an application server in the network.

In another embodiment, said policy function may be call stateless. In order to execute a policy associated with a signaling message, the call stateless policy function does not require information about the state the call is in. These control actions of a policy executed by a policy function may be implemented in a simple trigger-response model, which may be easily modified by changing the "triggers", i.e. the group of signaling messages, to which it should respond to. The policy function may be session aware but does not rely on the maintenance of state (i.e. information about the state of the end-to-end communication), so that inclusion of such policy function will therefore not introduce scaling problems.

In an embodiment said signaling message may comprise a signaling request. In another embodiment said method may comprise the step of: in response to the reception of said signaling request, checking the integrity of said signaling request on the basis of the P-Asserted-Identity field of said signaling request. In yet another embodiment said method may further comprise the step of: inserting enterprise information, preferably including an enterprise identifier and/or trunk information, in the header of said signaling request. Hence, a policy may also be associated with a signaling request, e.g. a SIP Invite, so that its integrity may be checked and - if necessary - modified depending the source of the signaling request.

In another aspect the invention may relate to a system for controlling a session in a service provisioning network. The system may comprise: at least a serving network node associated with at least one terminal, said terminal being configured to execute one or more services; at least one network border control node configured to receive at least one signaling message originating from a service executed on said terminal; a policy function associated with said network border control node, wherein in response to a reception of a signaling message by said network border control node, said policy function being configured to select an policy, preferably an integrity policy, associated with said signaling message and to control the integrity of said signaling message by executing said selected policy.

In one embodiment, said received signaling message may comprise a signaling response, said signaling response being associated with a signaling request from an originating terminal and/or an originating signaling node. In another embodiment, said policy function may be configured to provide said network border control node at least a terminating signaling node for said originating terminal and/or an originating signaling node for a signaling target comprised in said signaling request.

In yet another aspect the invention may relate to a network border control node for use in a system as described above. The network border control node may comprise: a policy function associated with said network border control node, wherein in response to a reception of a signaling message by said network border control node, said policy function being configured to select a policy, preferably an integrity policy, associated with said signaling message and to control the integrity of said signaling message by executing said selected policy.
a signaling control unit for receiving signaling messages from a terminal and for configuring in accordance with said policy executed by said policy function at least a terminating signaling node for establishing a session with an originating terminal and/or an originating signaling node for establishing a session with a terminating terminal.

In another embodiment the network border control node may be configured for, in response to the execution of a policy by the policy function, setting up a first session to an originating terminal or signaling node and/or for setting up a second session to a signaling target.

In a further embodiment the network border control node is configured for associating and/or controlling the first and second session.

In another embodiment parameters associated with the first and/or second session are collected by the network border control node for billing purposes. Such parameters may for example be session duration, bandwidth usage, signaling target end-point; originating terminal end-point, Quality of Service (QoS) parameters.

In yet a further embodiment the network border control node is configured for controlling one or more media paths associated with the first or second session.

The invention may also relate to a computer program product for controlling a session in a service provisioning network, the computer program product comprising software code portions configured for, when run on one or more network nodes in said service provisioning network, executing at least one of the method steps according as described above.

The invention will be further illustrated with reference to the attached drawings, which schematically show embodiments according to the invention. It will be understood that the invention is not in any way restricted to these specific embodiments.

### Brief description of the drawings

**Fig. 1** depicts a schematic of part of at least part of a service provisioning system according to one embodiment of the invention.
**Fig. 2** depicts provides a schematic signaling flow diagram according to one embodiment of the invention.
**Fig. 3** depicts a schematic signaling flow diagram of another embodiment of the invention.

### Detailed description

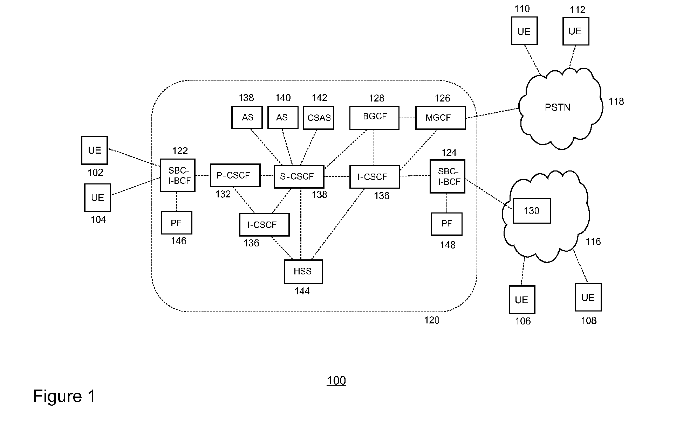

**Fig. 1** depicts a schematic of at least part of service provisioning system **100,** in particular an IMS-based service provisioning system, according to one embodiment of the invention. The system comprises one or more terminals (UE's) **102-112** connected to an IMS platform **120.** Terminals may be connected directly or via another network to the IMS. For terminals directly connected to the IMS, signaling and access control to the IMS is provided by a border network control node such as a session border controller (SBC) **122,124.** For a Public Switched Telephone Network (PSTN), such as a wireline or a wireless type access network (e.g. GSM and UMTS), access may be provided by a Media Gateway Control Function (MGCF) **126** wherein a Breakout Gateway Control Function (BGCF) **128** determines which MGCF a call should go through to reach a local PSTN.

In one embodiment, an IP-based packet switched network **116** may relate to an IP-based enterprise network, wherein an IP-based private branch exchange (IP-PBX) **130** manages the connections amongst the enterprise communication devices (e.g. wireline and/or wireless phones, soft clients, etc.) within the enterprise network and the interoperability to the IMS platform. In a further embodiment, an IP-based packet switched network **116** may relate to a Soft Switch platform or a further IMS platform comprising a further IMS core **130** of a further network operator.

The IMS core may comprise a set of Call/Session Control Functions (CSCF), including a Proxy-CSCF (P-CSCF) **132,** an Interrogating-CSCF (I-CSCF) **136** and a Serving-CSCF (S-CSCF) **138.** The P-CSCF is the first contact within the IMS core and, using routing information during the registration of terminals to the IMS system, it routes signaling messages (e.g. SIP messages) to the S-CSCF associated with a terminal. The I-CSCF identifies the correct S-CSCF for each incoming SIP request and forwards the request via a P-CSCF to the designated S-CSCF. Its IP address is published in the Domain Name Server (DNS) of the domain so that remote servers may find it. Further, the S-CSCF performs the session control services and acts as a SIP registrar. The IMS core may be further connected to a number of trusted application servers **138-142** for hosting voice-centric (VoIP) and multimedia services.

The terminals **102-112** are used as end-point connections in the IMS and may be configured for supporting VoIP and multimedia services. To that end, a terminal may comprise a SIP client (User Agent) supporting a SIP stack, which is capable of dealing with IMS Subscriber Identity Module (SIM) authentication, IPv4 and IPv6, QoS and resource reservation, etc. Further, a terminal comprises an Operating System (OS) for managing the resources of the terminal, e.g. one or more Central Processing Units (CPUs), memory for storing program instructions and data and Input/Output (I/O) devices such as a radio module for providing wireless access to the network and a user interface for the user to access and view services. The OS may further comprise Application Programming Interfaces (APIs) through which an application may access the OS and the I/O devices.

Applications may be implemented as one or more software programs executed by a processor in the memory of the terminal, as hardware (e.g. one or more chipsets providing the desired service) or a combination of hardware and software. The terminal may be implemented as an IP telephone or a soft IP phone, i.e. a computer program executed on a personal computer, a personal digital assistant (PDA) or a smart phone. In case of multimedia services, the terminal may be provided with a device capable of providing multimedia services to the user, such as television, a combination of a television and a set-top box and/or a home gateway.

A terminal may comprise one or more originating, intermediate and/or terminating applications. In particular the terminal may host VoIP applications, which in a conventional IMS architecture are provided by the application servers connected to the IMS core. The applications may provide VoIP services such as number normalization, Caller ID Blocking, Call Forwarding (conditional, no answer, busy), Calling Line Identification Presentation (CLIP), Voice Mail, Call Return Busy Destination, Call Waiting, Conferencing, Call Hold, etc. Further, the applications may provide multimedia services, such as (interactive) television, Content on Demand or videophone services and/or other types of services, including virus scanning, parental control functionality and/or firewall or proxy services. A terminal, which is configured to execute all or at least part of the services that normally may be available to users through application servers connected to the IMS core, is hereafter referred to as a service-enabled terminal. Hence for the services enabled by the service-enabled terminal itself, it does not require the use of application servers in the network. As a consequence for these services, no registration with application servers is required and/or these application servers need not be involved. As a further consequence, resources in the network, especially in the signaling path to these application servers and in the application servers themselves, may be saved and used for other purposes.

When a user registers with the IMS, the user service profile, which is stored in the Home Subscriber Service (HSS) **144** database, is transferred to the S-CSCF over Cx in a standardized XML format. These user service profiles comprise routing information for routing signaling messages that are either originated from or addressed to a particular terminal or one or more application servers. Registration of the user terminal to the IMS may involve a registration process wherein a registration signaling message, e.g. a SIP REGISTRATION message, is sent via the SBC and the P-CSCF to the I-CSCF of the IMS core. The I-CSCF selects on the basis of the information provided by the HSS a suitable S-CSCF. The registration message may then be forwarded to the S-CSCF serving UE for authenticating the user. After successful authentication and registration, the HSS may provide the S-CSCF with service routing information which may be contained in or associated with the service profile of the user. On the basis of the service routing information, the S-CSCF may register the user with one or more services in the one or more application servers by sending a register message (such as a SIP REGISTER message) to the application servers identified in the service routing information. The services may be identified by a set of initial filter criteria (iFC) in or associated with the user service profile.

An iFC may be generally regarded as service routing rules comprising a filter part and a decision part. The filter part comprises so-called Trigger Points, defining one or more filter criteria, which are applied to the incoming service message. The decision part specifies the action(s) to be taken when the incoming message matches with the filter criteria of the rule. The iFC thus comprises information for determining whether or not a signaling message (e.g. a SIP message) should be routed to a service located in a particular application server. The iFCs may be defined as described in TS 129 228 paragraph B.2.2, which is hereby incorporated by reference in this application. An iFC may comprise one or more Trigger Points, i.e. Boolean flags determined by a set of conditions to be met by the SIP request, and one or more SIP URIs of application servers the SIP request should be routed to in case the Trigger Point is TRUE. In case the Trigger Point is FALSE, it will not be routed to the application server comprising the service identified in the iFC.

In case of an enterprise access network, registration may involve both registration of the IP-PBX and all individual terminals associated with that IP-PBX. In that case, the enterprise network is connected via the P-CSCF to the IMS core (not shown). Alternatively an enterprise network **116** does not register with the IMS platform. Instead, the IP-PBX **130** is directly connected via a trunk to the Interconnection Border Control Function (I-BCF) **124** associated with the IMS platform.

A trunk is an IP interface between an enterprise network and an I-BCF, i.e. the edge of the IMS platform, which in one embodiment may be co-located with the SBC. The trunk is specified by an IP address and a port number in the IMS core and an IP address and port number at the enterprise (virtual) IP PBX. A trunk may be assigned to a trunk set, i.e. a collection of trunks an enterprise may use for traffic to and from certain number ranges, i.e. consecutive ranges of phone numbers that can be used on a trunk set by a company as a source and/or destination for SIP session. In order to establish the connection with the IBCF, the IMS is either configured with the static IP address of the IP-PBX or it is configured with the domain name of the customer network for retrieving the IP address of the IP-PBX using DNS.

Direct connection through the IBCF provides the advantage that individual users associated with an enterprise network are not required to register with the IMS core. Furthermore, problems with regard to so-called "surrogate" registration, wherein the SBC is used to register with the IMS core on behalf of the IP-PBX and the users associated with the IP-PBX, may be avoided. For further details regarding the call flow enterprise networks which are connected through the IBCF, reference is made to European patent application no. 09011907.4, which is hereby incorporated by reference.

In the architecture as depicted in **Fig. 1****,** a user service profile associated with a service-enabled user terminal may be configured to instruct the S-CSCF to only register with the application servers hosting services, which are not present and/or active in the service-enabled terminal. This may be achieved by setting the Trigger Point in the iFCs associated with the active services (e.g. VoiP and/or multimedia applications) present in the service-enabled terminal to FALSE. Hence, after registration, (part of) the applications may be executed by the SIP client in the service-enabled terminal (and not in the trusted environment of the IMS application servers). As such service-enabled terminal is not part of the trusted IMS environment and much more vulnerable to tampering and/or malicious code, further control, in particular security- and integrity control, of the signaling messages originating from such terminal may therefore be required.

Therefore, the system in **Fig. 1** may further comprise a call stateless application server (CSAS) **142,** which is connected to the IMS core and which is configured to manage the integrity of the SIP messages during the establishment of a call session between terminals wherein at least one the terminals is service-enabled. The scripts in the iFCs of the user service profile associated with the service-enabled terminal may instruct the S-CSCF to route signaling messages generated by that terminal to the CSAS. In one embodiment this may be achieved by setting the Trigger Point in the iFCs associated with the CSAS to TRUE.

Contrary to a conventional application server, the CSAS is call stateless and thus does not require information about the state the call is in. The CSAS treats each SIP message it receives as a message, which is independent of subsequent or earlier received messages. Hence, the CSAS may be session aware but does not rely on the maintenance of state (i.e. information about the state of the end-to-end communication). Typically the end nodes such as the UE and an application server are required to be call state aware. The inclusion of a CSAS will therefore not introduce scaling problems as the capacity of the CSAS only depends on traffic volumes and is not dependent on the number of subscribers to the IMS.

The CSAS may be configured to check the integrity of signaling messages generated by the service-enabled terminal. For example, in one embodiment the CSAS is configured to check the caller identity of the originating call by comparing the FROM field with P-Asserted-Identity field in the header of a SIP message received by the CSAS. To that end, it may use the contents of the P-Asserted-Identity header field to be copied in the FROM header field. The P-Asserted-Identity header field is inserted by the P-CSCF into the header of SIP messages and is used among trusted SIP entities to carry the identity of the user sending a SIP message as verified by authentication. It thus serves as reliable and trustable source information for checking the identity of the caller.

Control may alternatively and or supplementary be provided by a call policy function **146,148** in or associated with a border network control node such as an Session Border Controller (SBC) **122,124.** Similar to the CSAS, the policy function may be call stateless and thus does not require information about the state the call is in. It may be session aware but does not rely on the maintenance of state (i.e. information about the state of the end-to-end communication). The inclusion of such policy function will therefore not introduce scaling problems.

During session set-up a SBC may be inserted into the signaling path and controlled through the policy function. Further, a media controller associated with the SBC allows the policy function to control (e.g. relay) the media paths associated with the signaling messages.

A border network control node may generally comprise signaling control functions for controlling media sessions and media control functions for controlling media transport associated with a media session. In one embodiment such border network control node may comprise a SBC as defined in the TISPAN architecture (TS 23 228). One type of SBC may relate to an Access-SBC (A-SBC) for providing border control for subscriber access to the network core. From an IMS/TISPAN architecture perspective an A-SBC provides the integration of the P-CSCF function for providing access control at the signaling level and the core border gateway function (C-BGF) for providing access control at the transport level. Further, a further type of SBC may relate to an Interconnect-SBC (I-SBC) for providing border control between service provider networks interconnects. From an IMS/TISPAN architecture perspective an I-SBC constitutes the integration of the Interconnect Border Control Function (I-BCF) for providing overall border control between the service providers, the Inter-Working function (IWF) for providing SIP signaling interworking, and the Interconnect Border Gateway Function (I-BGF) for providing access control at the transport level.

The policy function may comprise at least one predetermined policy for each signaling message or for a predetermined set of signaling messages that the border control entity receives. A policy may comprise a set of rules and conditions to which a signaling message should comply to. Further, a policy may define one or more actions depending on whether a signaling message does or does not comply with the policy. The policy function may execute a policy and may configure the border control entity accordingly.

For example, in one embodiment, the policy function may comprise a first integrity policy for performing an integrity check on at least one or more predetermined SIP responses from the SIP response code classes 3xx, 4xx, 5xx and 6xx originating from the service-enabled terminal. In another embodiment, the policy function may comprise a second integrity policy for checking the integrity of one or more predetermined SIP requests originating from the service-enabled terminal. For example, instead of or in addition to an integrity check using a CSAS, the policy function may check the integrity of a SIP request using the P-Asserted-Identity field in the header of the request.

The policy function may be located in the SBC, in a separate policy server connected to the SBC, in the P-CSCF or in a Soft Switch residing in the network. Alternatively, the policy function may be implemented as a distributed policy function, distributed over the border control entity and one or more network nodes connected thereto.

In one embodiment, in response to a signaling response of a service-enabled terminal, e.g. a SIP 302 Moved Temporarily, the policy function may check whether the redirection is allowable. To that end, the policy function may check whether the contents of the destination field (i.e. the Contact C field) of the signaling response are listed in a white list, i.e. a list of allowable destinations. Alternatively, in another embodiment the policy function may check whether the destination field of the SIP redirect message is listed in a blacklist, i.e. a list of not allowable destinations. The lists of allowable and/or non-allowable destinations may be stored in a database associated with the policy function.

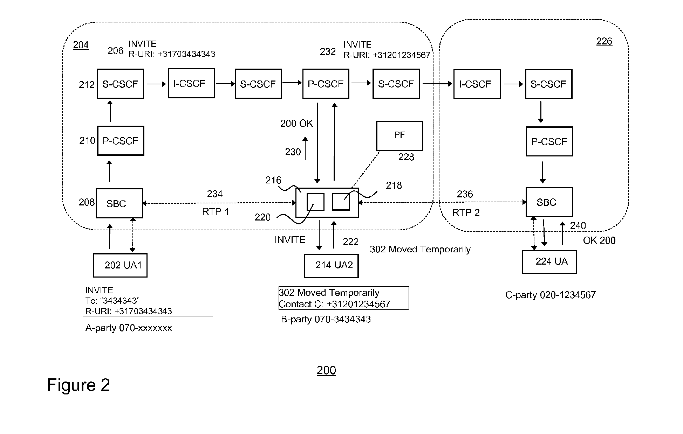

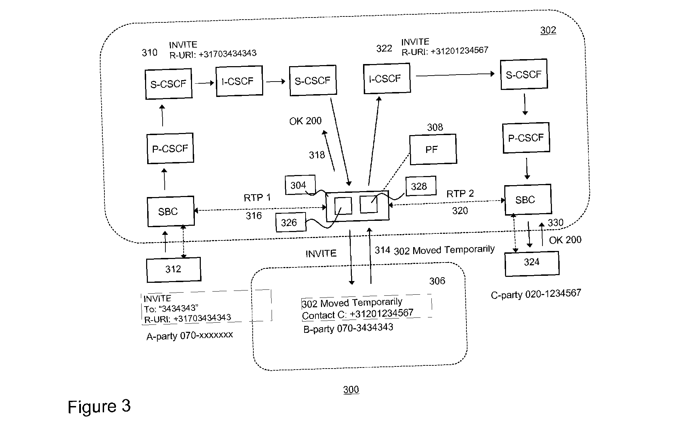

If the policy function establishes that the redirection target is an allowable destination, the policy function may configure the SBC as a Back-To-Back (B2BUA) user agent (e.g. a as defined in RFC 3261) acting on behalf of the service-enabled terminal as a terminating end-point and/or as an originating end-point for terminals and/or network elements involved in the session, e.g. a call session or a media session. This way the policy function may control both the SIP signaling and the associated media paths between both ends of a call. The advantages of using such policy function associated with a border control entity, e.g. a SBC, an I-BCF (Interconnect Border Control Function) or any other border control function as defined in the appropriate 3G or 4G standards, will be become more apparent from the examples as described hereunder with reference to **Fig. 2** and **3****.**

**Fig. 2** depicts a schematic **200** of one embodiment of the invention. In particular, **Fig. 2** depicts the signaling flow and the associated media paths in a service provisioning system wherein a SBC serves as an end-user interface and is configured and managed by a policy server. In this example, a first terminal **202** associated a first user agent (UA1) sends a first SIP request **206** to a first IMS platform **204** of a first operator. The request **206** is sent via a first SBC **208,** a P-CSCF **210** and its S-CSCF **212** to set a second terminal **214** associated with a second user agent (UA2). The SIP request, e.g. a SIP INVITE may comprise resource information, e.g. in the form of Service Description Protocol (SDP) attributes, for the purpose of resource reservation. Other protocols like the Resource Reservation Protocol (RSVP) may also be used for resource management.

The second terminal **214** may be registered as a service-enabled terminal to the IMS and its connection to the core is managed by a second SBC **216,** which may be configured as an A-SBC. Upon reception of the signaling message, a signaling controller **218** in the second SBC may instruct a media controller **220** associated with the second SBC to reserve resources (e.g. an IP and port addresses) on the basis of the resource information in the SDP body of the SIP Invite message or 200 OK message. In case of a SIP Invite message which does not comprise a SDP body, resource reservation may be realized on the basis of the resource information in the RTP session between the first and second terminal. Thereafter, it may forward the SIP INVITE to the second terminal.

In the example depicted in **Fig. 2****,** the service-enabled terminal may host a service application, in particular a VoIP application, which responds to the SIP INVITE by sending a SIP 302 Moved Temporarily **222** back to the first terminal. Such SIP response would force the first terminal to set-up a direct call session with a further third terminal **224** identified in the SIP response **222,** which may be connected to a second IMS platform **226** associated with a second operator. Such redirection is out of control of the first terminal and may lead to the situation where the user of the first terminal is billed for the forwarded call to the third terminal. This may lead to unwanted payments, especially when the terminal is a highly priced premium number or service hijacking. Similarly, the activated terminal application in the second terminal may return an error response code whereby the first terminal may become uncontrollable by its user.

For that reason, in response to the receipt of the SIP signaling response **222,** comprising for example a SIP response code 3xx, 4xx, 5xx or 6xx from the second , preferably service-enabled, terminal **214,** the second SBC **216** does not immediately release the reserved resources associated with the SIP INVITE **206.** This makes the actions of the second SBC stateful for individual SIP sessions by checking for a match between the session ID value received in the SIP signaling response **222** with the session ID value received in the SIP INVITE **206.** Instead, in response to the receipt of the SIP signaling response **222,** a call stateless policy function **228** hosted on a policy server associated with the second SBC **216** is executed. The received SIP signaling response **222** may for example be forwarded to the stateless policy function **228The** policy function may then select the policy associated with the SIP signaling response and execute it. In executing for instance an integrity policy, the policy function may check the allowability of the redirection message **222** e.g. by checking whether the contents of the destination field (e.g. the Contact C field) of the SIP redirect message is listed in a white list, i.e. a list of allowable destinations, and/or a blacklist, i.e. a list of not allowable destinations. If the signaling SIP redirect message (request) is not allowable, the policy function **228** may instruct the signaling controller **218** of the second SBC **216** to abort the session set-up by releasing the reserved resources within the media controller **220** and by sending a SIP BYE response back to the first terminal **202** (not shown). Alternatively the signaling controller may be instructed to send a SIP INVITE (not shown) to an application server comprising a terminating service, e.g. a voice-mail service associated with the second terminal **214.**

If however the redirection is allowable, the policy function **228** may instruct the signaling controller **218** of the second SBC **216** to set-up a first session between the first terminal and the signaling controller by sending a session confirmation **230,** e.g. a 200 OK message, back to the first terminal **202.** Further, the policy function **228** may instruct the signaling controller **218** of the second SBC **216** to set up a second session between the signaling controller **218** and the destination by sending a second SIP INVITE **232** to the destination (i.e. a third terminal **224)** and may instruct the media controller **220** of the second SBC **216** to reserve resources for the second session. This may involve the establishment of a new session, comprising the generation of a new session ID value to be included in the second INVITE **232,** whereby the session ID value is preferably unique for the second session. The signaling controller **218** will store this session ID value in order to act stateful for the second session if signaling responses (e.g. the OK 200 message **240)** are received wherein the session ID value matches the stored session ID value for the second session. In addition, the signaling controller **218** will act stateful as Back-To-Back User Agent (B2BUA) between the first session and the second session by interworking the SIP messages between both sessions by e.g. mapping the session ID values associated with the first session and the second session. For the redirection case, the signaling controller **218** may insert a SIP Diversion header (e.g. RFC 5806) or a SIP History-Info header (e.g. RFC 4244) in the second SIP INVITE **232** in accordance with the SIP standards for the coding of redirected calls (e.g. TS 124 229 and TS 129 163). The signaling controller **218** may insert other SIP headers in the second INVITE **232** based on the information received in the first INVITE **206.**

Resources for the second session may be reserved on the basis of the resource information in the first SIP INVITE. For example, in one embodiment, a copy of the resource information as sent by the first SIP invite to the SBC may be inserted into the second SIP invite sent to the third terminal. Once the signaling controller of the second SBC receives a confirmation **240** of the third terminal accepting the call, e.g. a 200 OK message, a call session between the signaling controller **218** of the second SBC **216** and third terminal **224** is established. Subsequently the signaling controller of the second SBC connects the call session associated with the first terminal **202** with the call session associated with the third terminal **224.** As a result the second SBC is inserted into both the signaling paths and preferably also in the media paths so that it may control a first media path **234** associated with the first terminal **202** and a second media path **236** associated with the third terminal **224.** By controlling the first signaling path and the second signaling path, with the second SBC acting as Back-To-Back User Agent (B2BUA), the actions of the second SBC are stateful between both sessions. The SBC may therefore influence the state of one session, by being aware of the state of the other.

This way the media paths associated with the call session are fully defined and controlled by the SBC and the associated policy function, thereby allowing correct billing of the call in the sense that the first terminal may be billed for the first session and the second terminal may be billed for the second session. Once the call session is set up and checked according to the policy function, involvement of the policy function is no longer needed and may disconnect itself from the SBC.

The call stateless policy function may be implemented at the transport level using a policy server communicating with the SBC using a suitable protocol, for example the Diameter protocol. In that case, the policy function may manage both the signaling controller (i.e. a SIP agent) and the media controller in the SBC.

In another embodiment (not shown), the policy function may be implemented at the application level, i.e. as an application hosted on an application server connected to the IMS core. In that case, the signaling controller of the second SBC is configured to relay the signaling messages originating from the second terminal to the application server hosting the policy function. In one embodiment, the policy server may be hosted by the CSAS **142.**

In another embodiment the policy function may be comprised in the SBC. In further variants, the policy function may be integrated in the I-BCF, the BGF, or the IWF.

In a further embodiment, the second terminal may be a service-enabled enterprise terminal connected via an IP-PBX to the SBC. In that case, the second SBC may comprise an I-BCF which is directly connected to the I-CSCF associated with the second terminal. Further, the policy function associated with the second SBC may be configured to modify signaling messages originating from the enterprise terminal. For example, the policy function may insert an enterprise identifier and trunk information into a signaling request. The enterprise identifier and the trunk information may be used by a trunk service hosted by an application server in the network. Trunk information may include information about the one or more trunks and trunk sets associated with the enterprise as identified by the enterprise identifier.

One trunk service may provide overflow behavior, wherein certain trunk sets are grouped in an ordered list to handle traffic associated with an enterprise in a specified manner. Another trunk service may provide load behavior wherein a list of trunks that are part of the same trunk set will be used in a specified manner to handle the traffic associated with an enterprise network.

It is appreciated that the policy function may control the signaling messages and media paths in various ways. For example, if a redirect is not allowed, the policy function may instruct the signaling controller of the SBC to send a SIP invite to an application server comprising a voice-mail service associated with the second terminal.

Hence, the policy function and its associated policies for signaling messages allows simple implementation of control actions in the service provisioning network, such as an integrity control and/or media path control, without affecting the advantageous of a service provisioning architecture as described in European patent application no. 09004140.1. The policy function may configure the SBC to act as Back-To-Back (B2BUA) user agent (e.g. as defined in RFC 3261) and may amend information in the signaling messages for allowing trunking services and integrity control. These control actions are implemented in a simple trigger-response model, which may be easily modified by changing the "triggers", i.e. the group of signaling messages, to which it should respond to.

**Fig. 3** depicts a schematic **300** of another embodiment of the invention. In particular, **Fig. 3** depicts the signaling flow and the associated media paths of a first service provisioning platform **302** wherein a SBC **304,** in particular an I-SBC comprising an Interconnection Border Control Function (I-BCF), is used as gateway to a second operator network **306.** The I-BCF and its associated signaling controlling function **326** and media controlling function **328** are configured by a policy function **308.** Similar to the signaling flow described with reference to **Fig. 2****,** an INVITE **310** is sent by a first terminal **312** via the I-BCF **304** to a second terminal or terminating application server (not shown) associated with the second operator network **306.** Using the resource information in the request, the media controlling function **328** associated with the I-BCF may reserve resources for a call session between the first, optionally service-enabled terminal and the second, optionally service-enabled terminal, which is registered with the second service provisioning platform. Further, the I-BCF may store request information in a memory. Request information may include the R-URI and session and operator information associated with the request. Session and operator information may include information which is needed for billing purposes such as an IMS Charging Identifier (ICID) and the Inter Operator Identifier (101) parameters defining the originating and terminating networks.

In response to the INVITE, the second terminal or a network signaling node (e.g. an Application Server) in the second operator network **306** (the second service provisioning network) may generate a response message, e.g. a SIP 302 Moved Temporarily **314,** back to the I-BCF. Upon reception of the response message, the I-BCF does not immediately release the resource reservation associated with the response message. This makes the actions of the I-BCF **304** stateful for individual SIP sessions by checking for a match between the session ID value received in the SIP signaling response **314** with the session ID value received in the SIP INVITE **310.** Hence nstead of releasing the resources, the I-BCF causes first causes the execution of a call stateless policy function **308** hosted on a for example apolicy server. The policy function checks for example whether the response message is allowed or not If the response message is not allowed (not shown), the I-BCF may instruct the signaling controlling function **326** to terminate the request by sending a BYE to the first terminal or it may send an INVITE to an application server comprising a terminating service, for example a voice-mail service associated with the second terminal.

If the response message comprises an allowable target, it may store the response information (i.e. the Contact-C field and session and operator information associated with the response). Further, it may check the operator information associated with a target terminal identified in the Contact-C field of the response with the operator information identified in the request information. If the target terminal uses the same operator as a requesting terminal, the policy function **308** may configure the I-BCF **304** to set up a first media session **316** between the first terminal and the I-BCF by sending an OK 200 **318** back to the first terminal, and to set up a second session between the I-BCF and the target terminal, by sending a second INVITE **320** to the target terminal **324.** The establishment of a new session preferably comprises the generation of a new session ID value to be included in the second INVITE **320,** whereby the session ID value is preferably unique for the second session. The signaling controller **326** will store this session ID value in order to act stateful for the second session, for instance when signaling responses (e.g. the OK 200 message **330)** are received wherein the session ID value matches the stored session ID value for the second session. In addition, the signaling controller **326** may act stateful as Back-To-Back User Agent (B2BUA) between the first session and the second session by interworking the SIP messages between both sessions by e.g. mapping the session ID values associated with the first session and the second session. For the redirection case, the signaling controller **326** may insert a SIP Diversion header (e.g. RFC 5806) or a SIP History-Info header (e.g. RFC 4244) in the second SIP INVITE **320** in accordance with the SIP standards for the coding of redirected calls (e.g. TS 124 229 and TS 129 163). The signaling controller **326** may insert other SIP headers in the second INVITE **320** based on the information received in the first INVITE **310.** Resource information in the second INVITE may be used for reserving resources associated with the first session.

Once the signaling controller of the I-BCF receives a confirmation **330** of the third terminal **324** accepting the call, e.g. a 200 OK message, a call session between the signaling controller **326** of the I-BCF and the third terminal is established. Subsequently the signaling controller **326** of the I-BCF connects the call session associated with the first terminal **312** with the call session associated with the third terminal **324.** As a result the I-BCF is inserted both into the signaling paths and into the media paths so that it may control a first media path **316** associated with the first terminal and a second media path **320** associated with the third terminal. By controlling the first signaling path and the second signaling path, with the I-BCF acting as Back-To-Back User Agent (B2BUA), the actions of the I-BCF are stateful between both sessions.

Hence, a call connection is established between the first terminal and the target terminal wherein the media paths associated with the call connection are controlled by the I-BCF and are kept within the network of the first operator. The stored request and response information associated with the call connection may be used by the first operator to settle billing issues with the second operator.

When using a policy function configured network border interface according to the invention, the call connection thus remains fully traceable and the terminals involved in the call session, in particular the first and second terminals, may be charged for different parts of the connection, while at the same time data connections (media paths) may be short-cut and optimized. Such optimizations efficiently reduce the resources of the network interfaces (such as the I-BCF). It is to be understood that the invention may be expanded to situations comprising more than two networks. The policy function may use the information in the signaling messages to optimize the media paths associated with a call connection.

It is further to be understood that any feature described in relation to any one embodiment may be used alone, or in combination with other features described, and may also be used in combination with one or more features of any other of the embodiments, or any combination of any other of the embodiments. One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, flash memory, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory) on which alterable information is stored.

Further, the invention is not limited to IMS but may also be implemented on the basis of a Soft Switch design whereby the basic user subscription functions, the IP session management and the specific VoIP service functions are fully or partially integrated within one or more trusted application servers residing in the network. Moreover, implementations of the invention other service provisioning networks such as 3GPP Long Term Evolution (LTE) or 3GPP Service Architecture Evolution (SAE) networks are also foreseen. Although the embodiments are described with reference to the SIP (Session Initiation Protocol) signaling protocol, other signaling protocols like H.323, H.248 and the MGCP (Media Gateway Control Protocol) may also be used. Moreover, the invention is not limited to the embodiments described above, which may be varied within the scope of the accompanying claims.

## Claims

1. Method for controlling a session in a service provisioning network, said network comprising a serving network node associated with at least one terminal, said terminal being configured to execute one or more services, the method comprising the steps of:
providing a network border control node associated with a policy function;
said network border control node receiving at least one signaling message originating from a service executed on said terminal;
in response to said reception of said signaling message, said policy function selecting an policy, preferably an integrity policy, associated with said signaling message and controlling the integrity of said signaling message by executing said selected policy.

2. Method according to claim 1, wherein said signaling message comprises a signaling response, said signaling response being associated with a signaling request from an originating terminal and/or an originating signaling node.

3. Method according to claim 2, wherein said method further comprising the step of:
reserving network resources for a session between said originating terminal and/or originating signaling node and said network border control node, preferably said reservation being based on resource information in said signaling request.

4. Method according to claims 2 or 3, wherein said method further comprises the steps of:
on the basis of said selected policy, checking whether said signaling response is allowable; and,
if said signaling response is allowable, setting up a first session between said originating terminal and/or said originating signaling node and said network border control node, and/or setting up a second session between said network border control node and said signaling target.

5. Method according to claim 4, said method further comprising the step of:
if said signaling response is not allowable on the basis of said selected policy, releasing resources reserved for a first session between said originating terminal and/or said originating signaling node and said network border control node.

6. Method according to any of claims 2-5, wherein said method further comprises the step of:
on the basis of said selected policy, configuring said network border control node to provide at least a terminating signaling node for said originating terminal and/or an originating signaling node for a signaling target comprised in said signaling request.

7. Method according to any of claims 1-6, wherein said network border control node is configured as a network border interface, preferably an access session border controller, between said service provisioning network and an access network or a user terminal.

8. Method according to any of claims 1-7, wherein said network border control node is configured as a network border interface, preferably an interconnection session border controller, between said service provisioning network associated with a first network operator and a further service provisioning network associated with a second network operator.

9. Method according to claim 8, wherein said request message originates from a first service provisioning network and said response message originates from a second service provisioning network; and wherein a first and second media path associated with said first and second session respectively are located within said first service provisioning network.

10. Method according to any of claims 1-9, wherein said services comprises at least one call service and wherein said policy function is call stateless.

11. Method according to claim 1, wherein said signaling message comprises a signaling request and wherein said method comprises the step of:
in response to the reception of said signaling request, checking the integrity of said signaling request on the basis of the P-Asserted-Identity field of said signaling request.

12. Method according to claim 11, wherein said method further comprises the step of:
inserting enterprise information, preferably including an enterprise identifier and/or trunk information, in the header of said signaling request.

13. System for controlling a session in a service provisioning network, said system comprising:
at least a serving network node associated with at least one terminal, said terminal being configured to execute one or more services;
at least one network border control node configured to receive at least one signaling message originating from a service executed on said terminal;
a policy function associated with said network border control node, wherein in response to a reception of a signaling message by said network border control node, said policy function being configured to select an policy, preferably an integrity policy, associated with said signaling message and to control the integrity of said signaling message by executing said selected policy.

14. A network border control node for use in a system according to claim , said control node comprising:
a policy function associated with said network border control node, wherein in response to a reception of a signaling message by said network border control node, said policy function being configured to select an policy, preferably an integrity policy, associated with said signaling message and to control the integrity of said signaling message by executing said selected policy.
a signaling control unit for receiving signaling messages from a terminal and for configuring in accordance with said policy executed by said policy function at least a terminating signaling node for establishing a session with an originating terminal and/or an originating signaling node for establishing a session with a terminating terminal.

15. A computer program product for controlling a session in a service provisioning network, the computer program product comprising software code portions configured for, when run on one or more network nodes in said service provisioning network, executing the method according to any of claims 1-12.
